# EUROPEAN PATENT APPLICATION

(11) **EP 4 036 275 A1**
(43) Date of publication of application: **03.08.2022**
(21) Application number: 21154035.6
(22) Date of filing: 28.01.2021
(51) Int. Cl.: C25B 1/04, C25B 9/00, C25B 15/025, C25B 15/029, C25B 15/08

(54) **METHOD OF OPERATING AN ELECTROLYZER SYSTEM AND ELECTROLYZER SYSTEM**

(71) Applicant: Hitachi Zosen Inova AG, 8005 Zürich (CH)
(72) Inventor: DOLL, Michael, 70565 Stuttgart (DE); HERING, Alfred, 70565 Stuttgart (DE); HAEGELE, Christian, 70565 Stuttgart (DE)
(74) Representative: Leinweber & Zimmermann

(57) **Abstract**

The invention relates to a method of operating an electrolyzer system, comprising an alkali lye circulating in the system, whereby a lye-related property is determined and further process control is subject to possible change in dependency of an evaluation of the determined property, wherein the property comprises the lye concentration which is in particular automatically detected and a lye refilling operation is in particular effected automatically in dependency of the detected concentration, and/or wherein the property comprises one or more visually inspectable parameter of the lye and/or lye flow, which is/are, in particular automatically and in particular during operation of the electrolyzer, detected by visual inspection of the lye/lye flow and wherein an operation condition of the electrolyzer system is determined on the basis of said evaluation.

## Description

The invention relates to a method of operating an electrolzyer system, comprising an alkali lye circulating in the system, and a respective electrolyzer system.

Such electrolyzer systems are well known and are, f.i., used for electrolysis of water. Such electro-chemical process is fed by alkali water pumped into the electrolzyer, being f.i. an electrolyzer of the staple-type, such as known f.i. from DE 10 2014 010 813 A1.

Although the electrolysis technique used in such electrolyzer systems is, regarding the working principle, known since very long time, there are still developments in order to improve efficiency and performance of physically implemented electrolyzer systems. Thereby, sometimes it turns out that electrolyzer systems having quite good performance initially, drop in performance over time and have a durability or lifetime lower than expected.

It is, therefore, an object of the invention to improve the durability and/or long-time performance of such electrolyzer systems.

This object is, in terms of a method, solved by a method as initially introduced, which is essentially characterized in that a lye-related property is determined and further process control is subject to possible change in dependency of an evaluation of the determined property, wherein the property comprises the lye concentration which is in particular automatically detected and a lye refilling operation is in particular effected automatically in dependency of the detected concentration, and/or wherein the property comprises one or more visually inspectable parameter of the lye and/or lye flow, which is/are, in particular automatically and in particular during operation of the electrolyzer, detected by visual inspection of the lye/lye flow and wherein an operation condition of the electrolyzer system is determined on the basis of said evaluation.

This further development allows for a higher reliability of the working system and also an increase of the durability of the system, since detrimental effects to the process are timely detected and can be counteracted in closer accuracy to the working status of the system. For instance, the lye concentration kept outside ideal working conditions for too long time is found as to have a quite critical impact on the long-time performance of electrolyzer systems. Change of electrolyzer lye concentration can occur during production, due to pollution, water refilling, etc. Moreover, it has been found out that deviations from reasonable optimized working conditions can be anticipatingly recognized by detection and preferably also monitoring of properties of the lye flow other than only the lye concentration, and reactions to be taken upon detecting deviations in said parameters, like maintenance according to in particular actualized maintenance scheduling, can be provided.

In a preferred embodiment, determination of the lye-related property is done on regular or selectable repetition. Preferably, said determination is repeated at least every month, preferably at least every two weeks, in particular at least every week. However, even better and more accurate handling can be reached when said determining is at least every four days, at least every two days, or even at least once a day. Of course, in particular in order to react also quickly on singular events, said determination can be at least once every 8h, at least once every 4h, or at least once every 2h.

In a preferred embodiment, there is not only a one time consideration of the determined property value, but also a monitoring of the development of said parameter value over time. To this end, the measuring results can be stored. From parameters being directly expressable in a numerical value as the lye concentration, a function of said value as function over time can be established. From properties resulting from visual inspection, secondary parameters can be derived and expressed as a function, such as f.i. the number of bubbles recognizable in images of the liquid electrolyte/alkali water, or a bubble density per reference area or reference volume.

In a preferred embodiment, one or more of said parameters comprise one or more from the group of: bubbles in the lye flow, turbidity of the lye, color of the lye. All these parameters can be observed within an inspection area, in particular the same inspection area.

In a preferred embodiment, the circulating lye flow passes a zone in which the lye is illuminated, the zone being preferably confined by an at least partly light-transparent bounding. That is, the inspection area is within the circulating flow of the liquid electrolyte and inspection is in particular performed during regular operation of the system, that is during production of in particular hydrogen by the elctrolyzer of the electrolyzer system.

In a preferred embodiment, the visual inspection is made by at least one camera, having in particular its field of view overlapping with the illuminated zone.

The camera could work in the visible electromagnetic spectrum. However, also UV-cameras and in particular also infrared cameras are envisaged, alone or in combination. The inspection may comprise IR spectroscopy, in particular Fourier transformation infrared spectroscopy or Raman spectroscopy, in particular also for the alkali lye concentration measurement.

In a preferred embodiment, the illumination source and the camera opening are essentially arranged at opposite sides of the inspection zone. However, also other optical arrangements can be used, possibly also mirror systems for deflecting illumination light.

In a further preferred embodiment, the evaluation comprises image analysis, in particular assisted by artificial intelligence. Corresponding software may be included in a control of the electrolyzer system. The control may receive data from the inspection that are provided from its sensoring elements, f.i. one or more cameras. Said data may be subject to imaging analysis to recognize bubbles from surrounding liquid, levels of turbidity and/or of color. To this end, software modules may be trained for image recognition. On the other hand side, the software modules can attribute to visualized picture data material, secondary quantities derived from image analysis, as f.i. the number of bubbles per unit area of the screen surface, or attribute a numeric ranking to turbidity levels or color levels or different colors. Thereby, it is possible to quantify differences in visualizable pictures by said secondary quantities or parameters for comparison. This allows to give estimation for future development in terms of bubble concentration, turbidity development, or color changes, depending on the nature of the primary property.

Depending on the observed change in one of the parameters, an operation stop could be provided in case that one of the parameters is above or below a pre-defined threshold corresponding to a severe stop condition. A second threshold can be introduced, where passing the threshold gives rise to performed maintenance by issuing a corresponding signal indicative for maintenance to be carried out. Further, third level thresholds can be introduced, the passing thereof being indicative for actions to be taken, possibly also during regular operation of the electrolyzer system.

This may include a refilling of alkali lye to the alkali water, to bring the lye concentration above a desired minimum value. In a preferred embodiment, such minimum value is at least 20%, preferably at least 22%, in particular at least 24%. Further, it can be provided that the refilling operation is controlled such that the lye concentration after refilling is not higher than 34%, preferably not higher than 32%, in particular not higher than 30%. As already said above, such alkali lye concentration surveillance is preferably based on optical measuring in particular during ongoing electrolysis process, and in particular automatically. The overall filling level control of the alkali water can then be limited to an in particular digitally implemented surveillance of falling below a first threshold and optionally of exceeding a second threshold indicative for minimum, respectively maximum filling.

Therefore, by such control and surveillance, it can be safeguarded that the lye concentration is outside a desired window only for much lower times than in conventional systems, where maybe once every two months is obtained in conventional systems by taking a probe from the system and analyze it chemically in a laboratory. Further, one can react on insufficient gas separation in the degassing process, f.i. in respective drums collecting H₂ on the one hand side and O₂ on the other hand side, while the degassed alkali water is recirculated back into the process.

As already indicated above, in a preferred embodiment the evaluation comprises providing a signal indicative of a recommended remaining operation time, or remaining time until next maintenance or other actions to be taken during continued operation, as f.i. an alkali lye refilling during continued electrolysis.

One example of such action can be a reduction of the alkali water flow velocity, to increase degassing. Preferably, the velocity reduction is controlled by a threshold selected to maintain a selected level of cooling in the electrolyzer. This can be implemented by a regulation involving temperature sensoring or secondary heat detection at the electrolyzer.

In a further preferred embodiment, evaluation is repeatedly, in particular continuously done and monitored, in particular at least partly displayed or otherwise indicated to a user of the system. Suitable repetition times envisaged by the invention are already cited above.

The monitoring may comprise also an allocation of the difference recognized during inspection of the system and responsible for the maintenance, to the respective problem identified during maintenance, such that a check list for maintenance can be developed in a more focused manner. Thereby, maintenance time can be reduced and, the other way round, production time can be increased, which also increases the performance of the electrolyzer system.

Regarding the system, the invention provides an electrolyzer system, comprising an alkaline electrolyzer producing hydrogen, an alkaline lye circulation circuit, in particular a device for refilling the circuit with alkaline lye, and a controller to control the system for operation, essentially characterized by a detection device, in particular controlled by the controller, detecting the lye concentration and by the refilling device operation being controlled by the controller to automatically perform a refilling operation in dependency of the detected concentration, and/or by a visual inspection device inspecting in particular automatically the lye in at least an inspection zone of the circuit, which is in particular illuminated by an illuminating device of the system.

The advantages of the electrolyzer system according to the invention result from the above advantages of the inventive method.

The controller of the electrolyzer system may comprise image recognition software and/or optical spectroscopy software, in particular to perform signal transformation into frequency space and spectral analysis. Thereby, evaluation can be done automatically or at least semi-automatically, leaving the user f.i. options which kind of analysis are to be performed. For instance, the user could select the option to only perform an analysis/measurement of the lye concentration. The user could also decide for a full analysis of the visual inspection system. Moreover, full analysis could always be performed in the background, and the user has the possibility to configure windows in the operation screen according to his preferences, which parameters are displayed on the screen and in particular also how the parameters are displayed on the screen.

The respective data can also be selected as data associated to the respective technical data of the electrolyzer, and provided as input for other electrolyzers of essentially the same type.

The piping of the alkaline lye circulation circuit may have an inspection zone in which the electrolyte flow is accessible for optical measurements. In particular, at least part of the tubing as boundary for the electrolyte flow is light-transparent (and/or transparent for UV and/or IR radiation). Piping elements with integrated inspection glasses can be used. It is preferred that the alkali resistance of the glass is at least 25%, preferably at least 30%, in particular at least 35%, and/or is of at least class 2 according to DIN ISO 695. Further, it is preferred that the glass has a temperature resistance of at least 80°C, preferably at least 100°C, in particular at least 110°C. The pressure resistance of the glass is preferably at least 30 bar, more preferably at least 36 bar, in particular at least 40 bar. The thickness of the glass may be larger than 3,6 mm, preferably larger than 4,2 mm, in particular larger than 4,8 mm. Preferably, boron silicate glass, tempered sodaline glass or others with similar properties can be used. Further, an optical detection means can be provided, f.i. a camera sensitive in a frequency range corresponding to visible light, IR radiation or UV radiation. Further, in the inspection zone, an illumination device can be arranged, such that the alkali water flow is illuminated, preferably from the side opposite to the side where the sensoring/camera is provided.

Moreover, when providing the light measurement or f.i. infrared measurement to determine the lye concentration, preferably the additional devices mounted and/or close to the inspection zone are configured and/or protected such as not to increase the explosion risk level, such that the overall system can at least partly be installed in an explosive zone with security level as without said additional devices.

In a preferred embodiment, the electrolyzer of the electrolyzer system has at least 40, in particular at least 70, more preferably at least 100 cells. It is also envisaged to have at least 120 cells or more, at least 130 cells or more, or even at least 140 cells or more. There is no particular preference for the alkali lye, f.i. KOH or NaOH could be used. Moreover, the invention is also appliable irrespective of the details of the structure of the electrolyzer, the kind of degassing system, and/or the details of the configuration of the recirculating piping for the alkali water, such that systems as known to the person skilled in the art can be used for these parts of the electrolyzer system.

Further features, details and advantages of the invention become apparent from the subsequent description of embodiments also with reference to the accompanying drawings, wherein
Fig. 1 is an explanatory drawing of an electrolyzer system, and
Fig. 2 is a schematical control scheme for an electrolyzer system.

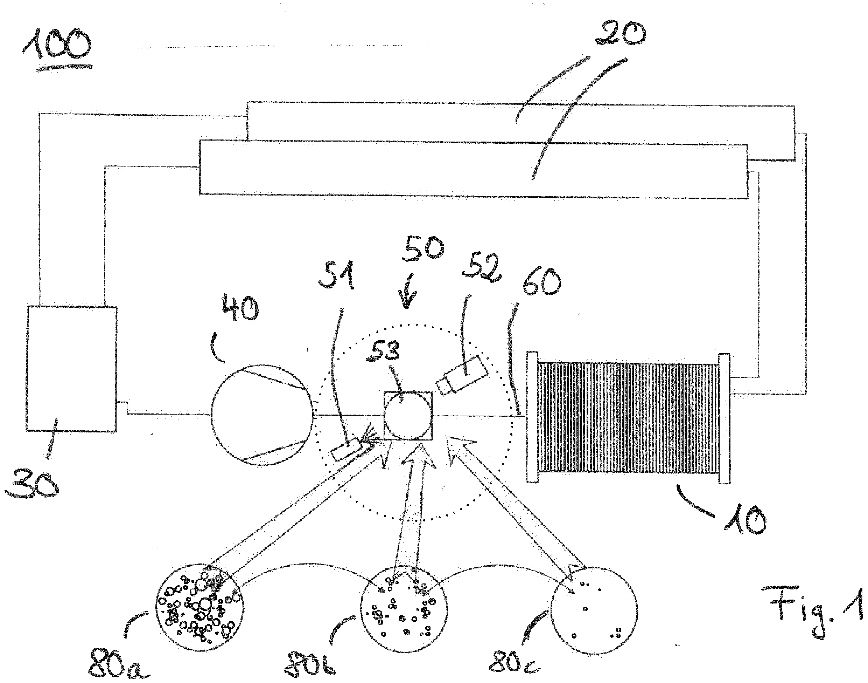

Central piece of the electrolyzer system 100 shown in Fig. 1 is the electrolyzer 10 of the cell-stack type, comprising a number of cells stapled along a staple axis between two end plates (anode-side and cathode-side end plate). In a subject embodiment, the electrolyzer performs electrolysis of water to produce hydrogen. Further devices as a rectifier electrically coupled to electrolyzer 10 is not shown.

The electrolyzer 10 is designed for alkaline electrolysis operation, that is the electro-chemical process of the electrolysis is fed by alkali water pumped into the electrolyzer stack. To this end, alkali water circulates in piping 60.

It is to note that, in Fig. 1, said circulation of the alkali water is shown in a simplified manner by having the electrolyzer 10 inserted in the piping 60 as if it would just be another pipe. However, in more preferred embodiment, contrary to what is shown in Fig. 1, entry of piping 60 and exit of piping 60 could be on the same side of the electrolyzer 10, f.i. at the cathode-side end plate.

In the circulation, degassing of the alkali water is performed in gas separators downstream the electrolyzer 10, f.i. by respective H₂, O₂ drums having the reference numeral 20. The alkali water then reaches a venting vessel 30, from which it is pumped again to the electrolyzer 10.

During said circulation of the alkali water, the alkali water passes through an inspection zone 50 which, in the embodiment shown in Fig. 1, is placed between pump 40 and electrolyzer 10. The inspection zone 50 could, however, also be placed elsewhere, preferably in the path of the piping where there is no separation into hydrogen and oxygen carrying flows, and downstream of the degassing.

In the inspection zone 50, the alkali water is visually inspectable. To this end, a gauge glass can be mounted into piping 60. In a preferred embodiment and as indicated in Fig. 1, two inspection (gauge) glasses 53 can be arranged inside of the liquid electrolyte, with a camera 52 on one side and a light source 51 on the other side. The electrolyte in the inspection zone will, thus, be illuminated by lamp 51. However, this particular arrangement is not restrictive to the invention, and other geometric arrangements could be used to illuminate the electrolyte flow in the field of view of inspection sensor being, in the shown embodiment, camera 52.

In the inspection zone 50, light measurements can, thus, be taken. The inspection encompasses measurements with light in the visible spectra, but also UV-light and/or infrared light inspection.

Further, a control device 99 may contain imaging software to evaluate the picture data taken by camera 52. One evaluation is subsequently described with view to camera images 80a, 80b, and 80c shown in Fig. 1. In this evaluation, the bubble density in the inspection area is determined. For explanation purpose, the situation is displayed somewhat simplified.

If a picture as that of 80a is taken, a large bubble density, respectively number of bubbles is recognized, which is more than a threshold value indicative for acceptable gas separation.

For the situation shown in picture 80b, the bubble density/number of bubbles is lower but close to said threshold, indicative that the gas separation is less effective and maintenance actions should be taken. In the picture 80c, the bubble concentration/number of bubbles is below another threshold indicative for fully acceptable process conditions.

Alternatively and/or additionally, other properties of the lye flow could be visualized and analyzed, f.i. the turbidity of the lye or the color of the lye, for comparison with references indicative of acceptable process conditions.

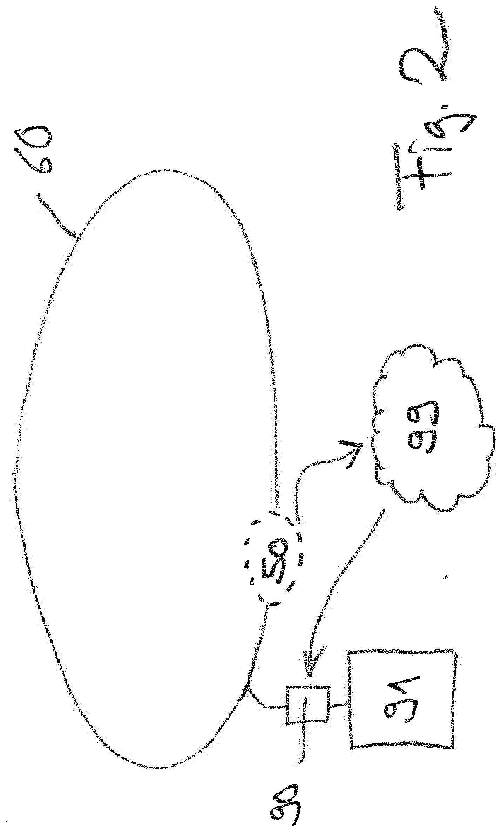

Another quantity which can be determined in inspection zone 50 is the lye concentration. To this end, spectroscopy via Fourier transformation can be done, f.i. Fourier transformation infrared spectroscopy. The measurement result is, within control 99 of the system 100 (Fig. 2) compared to threshold values defining a concentration window. In the subject embodiment, a lye concentration window from 25 to 30% is defined. Once the lye concentration drops out of the range of said window, the control 99 may trigger a signal indicative for a refilling of the lye. In a preferred embodiment, such refilling process is automated. That is, after detection of lye concentration loss, a filling pump 90 (Fig. 2) can refill lye from lye reservoir 91 into the process. Thereby, a lye concentration of desired concentrations can be obtained within a regulation by control 99.

In case that no automated lye refilling is implemented, the control unit can still monitor the measured lye concentration and can analyze the lye concentration as a function over time and, by using f.i. the first derivative, possibly even the second derivative or other extrapolation means, give out a timing signal indicative for the remaining time until a refilling operation should be performed.

In the same way, the other parameters discussed above as bubble concentration/number of bubbles, or turbidity, or color of the lye can be monitored, to give prognostic estimation for the timing of maintenance operation.

In the subject embodiment, the inspection area is designed such as to not create possible ignition sources, by respective protection of the involved devices in accordance with ATEX 2014/34/EU Then, the electrolyzer system including inspection area 50 being in particular certified for arrangement in explosive zones are not detrimentally effected by required security level regarding EX-areas. Wiring of the devices (camera 52, illumination 51) can be f.i. on NSGAFOU level.

By the above arrangement and surveillance, not only scheduling of maintenance is easier and can be performed more accurate to the actual status of the electrolyzer system. Also a higher reliability of status monitoring is provided, allowing to slow down the aging of the system and leading, thus, also to better long-time performances of the electrolyzer system.

The invention is not limited to above details given for exemplary embodiments of the invention. Rather, the features of the above description and the subsequent claims can be, alone or in combination, relevant for the invention in its various aspects.

## Claims

1. Method of operating an electrolyzer system, comprising an alkali lye circulating in the system, **characterized in that**
a lye-related property is determined and further process control is subject to possible change in dependency of an evaluation of the determined property, wherein
the property comprises the lye concentration which is in particular automatically detected and a lye refilling operation is in particular effected automatically in dependency of the detected concentration, and/or
wherein the property comprises one or more visually inspectable parameter of the lye and/or lye flow, which is/are, in particular automatically and in particular during operation of the electrolyzer, detected by visual inspection of the lye/lye flow and wherein an operation condition of the electrolyzer system is determined on the basis of said evaluation.

2. Method according to claim 1, wherein one or more of said parameters comprise one or more from the group of: bubbles in the lye flow, turbidity of the lye, color of the lye.

3. Method according to claim 1 or 2, wherein the circulating lye flow passes a zone in which the lye is illuminated, the zone being preferably confined by an at least partly light-transparent bounding.

4. Method according to claim 3, wherein the visual inspection is made by at least one camera having in particular its field of view overlapping with the illuminated zone.

5. Method according to claim 4, wherein an illumination source and the camera opening are essentially arranged in opposite sides of said zone.

6. Method according to any of the preceding claims, wherein the evaluation comprises image analysis, in particular assisted by artificial intelligence.

7. Method according to any of the preceding claims, wherein an operation stop and/or subsequent maintenance of the electrolyzer system is decided on the basis of said evaluation.

8. Method according to any of the preceding claims, wherein the evaluation comprises providing a signal indicative of a recommended remaining operation time stop, maintenance of the electrolyzer system, and/or actions to be taken during continued operation.

9. Method according to any of the preceding claims, wherein evaluation is repeatedly, in particular continuously done and monitored, in particular and at least partly displayed or otherwise indicated to a user of the system.

10. Electrolyzer system (100), comprising
an alkaline electrolyzer (10) producing hydrogen, an alkaline lye circulation circuit (60), a device (90, 91) for refilling the circuit with alkaline lye, and a controller (99) to control the system for operation, **characterized by**
a detection device (50), in particular controlled by the controller, detecting the lye concentration and by the refilling device operation being controlled by the controller to automatically perform a refilling operation in dependency of the detected concentration, and/or
by a visual inspection device inspecting (52) in particular automatically the lye in at least an inspection zone of the circuit, which is in particular illuminated by an illuminating device (51) of the system.

11. Electrolyzer system according to claim 10, wherein the controller comprises image recognition software and/or optical spectroscopy software, in particular to perform signal transformation into frequency space and spectral analysis.

12. Electrolyzer system in accordance with claim 10 or 11, having its devices in the inspection zone configured as explosion proof devices and/or as devices not increasing the explosion risk level.

13. Electrolyzer system according to any of claims 10 to 13, having at least one inspection glass (53) is incorporated in the piping (60) at the inspection zone (50).
